# EUROPEAN PATENT APPLICATION

(11) **EP 4 501 416 A1**
(43) Date of publication of application: **05.02.2025**
(21) Application number: 23912704.6
(22) Date of filing: 15.12.2023
(51) Int. Cl.: A62C 3/07, A62C 3/16, A62C 35/68, A62C 31/02, A62C 37/38, A62C 99/00, B60L 3/00, B60L 58/10, H01M 10/42

(54) **VEHICLE BATTERY FIRE PREVENTION SYSTEM USING LIQUEFIED CARBON DIOXIDE, AND ELECTRIC VEHICLE BATTERY MODULE AND ELECTRIC VEHICLE INCLUDING SAME**

(30) Priority: 26.12.2022 KR 20220183958
(71) Applicant: Victex Co., Ltd., Incheon 22850 (KR)
(72) Inventor: CHOI, Jin Heung, Gyeonggi-do 11704 (KR)
(74) Representative: BCKIP Part mbB
(86) International application number: PCT/KR2023/020722
(87) International publication number: WO 2024/144029

(57) **Abstract**

The present invention is directed to a vehicle battery fire prevention system using liquefied carbon dioxide, and a battery module for an electric vehicle and electric vehicle including the same. There is provided a vehicle battery fire prevention system using liquefied carbon dioxide, the vehicle battery fire prevention system including: a housing configured to provide an accommodation space in which a battery module is accommodated; a chamber configured to store a fire extinguishing gas to be sprayed into the housing in the form of fire extinguishing liquid; a fire extinguishing tube connected to the chamber, and extended into the housing along a predetermined path; and a control unit configured to control the spraying of the fire extinguishing gas through the fire extinguishing tube; wherein the control unit performs control so that spraying corresponding to a plurality of predetermined conditions for spraying into the accommodation space can be performed.

## Description

### [Technical Field]

The present invention relates to a vehicle battery fire prevention system using liquefied carbon dioxide, and a battery module for an electric vehicle and electric vehicle including the same.

### [Background Art]

The reality is that there are currently no control apparatuses or systems that can extinguish electric vehicle fires, so that problems such as complete burnout or fire spread often occur. As an example, the battery-dedicated frame of an electric vehicle is installed in the bottom of the vehicle and includes numerous cells made of lithium ions. The cells are gathered together to form modules, and these modules are packaged into an intensive structure to manufacture and install the automobile battery frame. Lithium-ion batteries are chemical energy storage devices that charge and discharge lithium ions through cathodes and anodes. Lithium-ion batteries charge faster and have a higher output density than other types of batteries, so that they can be used for a long time. They are relatively compact and lightweight. They do not have a memory effect which reduces the operating time compared to the original operating time when charged before being fully discharged. Moreover, they are eco-friendly and have relatively low maintenance costs. However, compared to other types of batteries, they have the disadvantage of being vulnerable to fire. Battery fires are mainly caused by the thermal runaway of battery cells, which is a chemical reaction in which a highly oxidizing anode and a highly reducing cathode come together and rapidly generate self-heating. When thermal runaway occurs, battery cells release stored energy considerably rapidly, and, as energy is charged more in the battery cells, the thermal runaway reaction occurs more actively. Therefore, there is a need for a means for preventing fire occurring from the battery of such an electric vehicle and effectively extinguishing fire in the event of a fire.

### [Disclosure]

### [Technical Problem]

An object of an embodiment of the present invention is to prevent a fire from leading to a larger fire by suppressing a fire that may occur from a battery loaded into an electric vehicle.

An object of an embodiment of the present invention is to construct an optimal environment to improve an energy consumption efficiency of electric vehicles(km/kWh: distance(km) to drive per 1 kWh) output from a battery loaded into an electric vehicle.

### [Technical Solution]

The present invention is directed to a vehicle battery fire prevention system using liquefied carbon dioxide, and a battery module for an electric vehicle and electric vehicle including the same. There is provided a vehicle battery fire prevention system using liquefied carbon dioxide, the vehicle battery fire prevention system including: a housing configured to provide an accommodation space in which a battery module is accommodated; a chamber configured to store a fire extinguishing gas to be sprayed into the housing in the form of fire extinguishing liquid; a fire extinguishing tube connected to the chamber, and extended into the housing along a predetermined path; and a control unit configured to control the spraying of the fire extinguishing gas through the fire extinguishing tube; wherein the control unit performs control so that spraying corresponding to a plurality of predetermined conditions for spraying into the accommodation space can be performed.

Additionally, in the housing, the fire extinguishing tube may include one or more first nozzles configured to open toward electrode portions of the battery module, and second nozzles configured to have a smaller open area and be formed more than the first nozzles.

Furthermore, the plurality of predetermined conditions may be different temperature ranges, and for example, the different temperature ranges may include a first temperature range including room temperature at which the battery module is operated, a second temperature range including a temperature range higher than the first temperature range, and a third temperature range including at least a temperature at which thermal runaway starts while being higher than the second temperature range. Temperature ranges in which the control unit allows the fire extinguishing gas to be sprayed are the second temperature range and the third temperature range.

Furthermore, in the third temperature range, the control unit may allow the fire extinguishing gas to be sprayed through the first nozzles. And in the second temperature range, the control unit may allow the fire extinguishing gas to be sprayed through the second nozzles.

Furthermore, the control unit may limit the spraying of the fire extinguishing gas through the second nozzles when only a pressure and fire extinguishing liquid that can fill the accommodation space with the fire extinguishing gas less than twice remain inside the chamber.

Furthermore, the housing may be provided, on one side thereof, with an exhaust portion configured to maintain airtightness between the accommodation space and the outside, to exhaust air to the outside when the pressure of the accommodation space exceeds a predetermined value, and to be opened to exhaust air only in one direction formed from the accommodation space to the outside.

Furthermore, the control unit may be connected to the first valves configured to determine the opening and closing of the first nozzles, the second valves configured to determine the opening and closing of the second nozzles, and one or more of temperature and pressure sensors exposed to the accommodation space, and may control the opening and closing of the first or second valves based on the sensed information detected by one or more of the temperature and pressure sensors from the accommodation space.

There is provided a vehicle battery module including the vehicle battery fire prevention system using liquefied carbon dioxide described above and a battery module.

There is provided an electric vehicle including the vehicle battery module described above.

### [Advantageous Effects]

According to an embodiment of the present invention, there may be provided the vehicle battery fire prevention system that prevents a fire from leading to a larger fire by suppressing a fire that may occur from a battery loaded into an electric vehicle.

An embodiment of the present invention may provide the vehicle battery fire prevention system that constructs an optimal environment to improve an energy consumption efficiency of electric vehicles(km/kWh: distance(km) to drive per 1 kWh) output from a battery loaded into an electric vehicle.

### [Description of Drawings]

FIG. 1 is a diagram showing an example in which a vehicle battery fire prevention system according to an embodiment of the present invention is applied to a vehicle;
FIG. 2 is a diagram showing an example in which the fire extinguishing tube of the system according to an embodiment of the present invention is extended;
FIG. 3 shows an example of the extension of the fire extinguishing tube according to an embodiment of the present invention, wherein FIG. 3(a) is a view showing an embodiment in which the fire extinguishing tube is extended along the edge of a battery module, and FIG. 3(b) is a view showing an embodiment in which the fire extinguishing tube is extended to correspond to the top surface of a battery module;
FIG. 4 is a cross-sectional view of the fire extinguishing tube according to an embodiment of the present invention, wherein FIG. 4(a) is a cross-sectional view of the point where a first nozzle is formed, and FIG. 4(b) is a cross-sectional view of the points where second nozzles 132a are formed;
FIG. 5 is a schematic diagram showing how whether to open the valves is determined by the control unit according to an embodiment of the present invention; and
FIG. 6 is a graph showing the continuously increasing temperature over time in the system according to an embodiment of the present invention.

### [Best Mode for Invention]

Hereinafter, specific embodiments of the present invention will be described with reference to the drawings. However, these are only examples and the present invention is not limited thereto.

In the description of the present invention, when it is determined that a detailed description of a known technology related to the present invention may unnecessarily obscure the gist of the present invention, the detailed description will be omitted. Furthermore, the terms to be described below are the terms defined by taking into consideration the functions thereof in the present invention, and may vary depending on the intention of a user or operator, custom, or the like. Accordingly, the definitions thereof should be made based on the context throughout the present specification.

The technical spirit of the present invention is determined by the claims, and the following embodiments are merely means for efficiently describing the technical spirit of the present invention to those having ordinary skill in the art to which the present invention pertains.

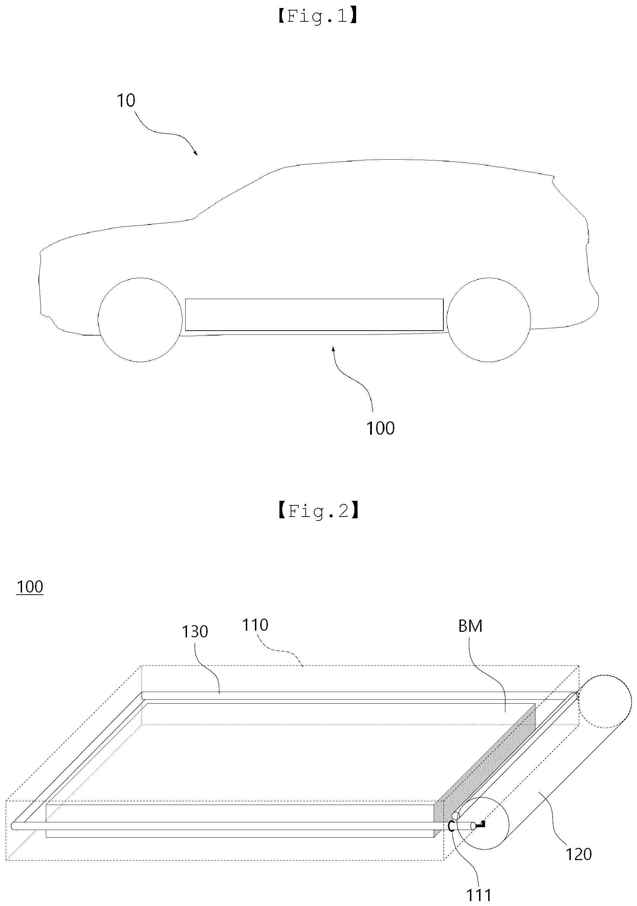

FIG. 1 is a diagram showing an example in which a vehicle battery fire prevention system 100 (hereinafter referred to as the system 100) using liquefied carbon dioxide CO₂ according to an embodiment of the present invention is applied to a vehicle 10.

Referring to FIG. 1, the vehicle battery fire prevention system 100 using liquefied carbon dioxide CO₂ of the present invention may be used for a vehicle battery module BM by accommodating the battery module BM therein. Furthermore, in the case of an electric vehicle including such a vehicle battery module BM, more capacity may be secured by arranging batteries widely on the bottom of the electric vehicle due to the design in which the center of gravity and distribution are taken into consideration. Although such a battery module BM is used as a high-density energy source, a fire may occur due to a defect, so that a means for preventing such a fire is required. Due to the characteristics of the battery module BM applied to the vehicle 10, once a fire has occurred, there occurs a thermal runaway phenomenon in which the temperature rapidly increases, making it relatively difficult to extinguish the fire and causing enormous damage. Therefore, the system 100, which is an embodiment of the present invention, effectively builds an environment for the battery module BM in a situation such as the driving of the vehicle 10. Accordingly, an energy consumption efficiency of electric vehicles(km/kWh: distance(km) to drive per 1 kWh) output from the battery module BM may be improved, and also a fire may be immediately extinguished for the battery module BM when the outbreak of the fire is expected or detected. Hereinafter, the present invention will be described in detail through the structure of the system 100.

FIG. 2 is a diagram showing an example in which the fire extinguishing tube 130 of the system 100 according to an embodiment of the present invention is extended.

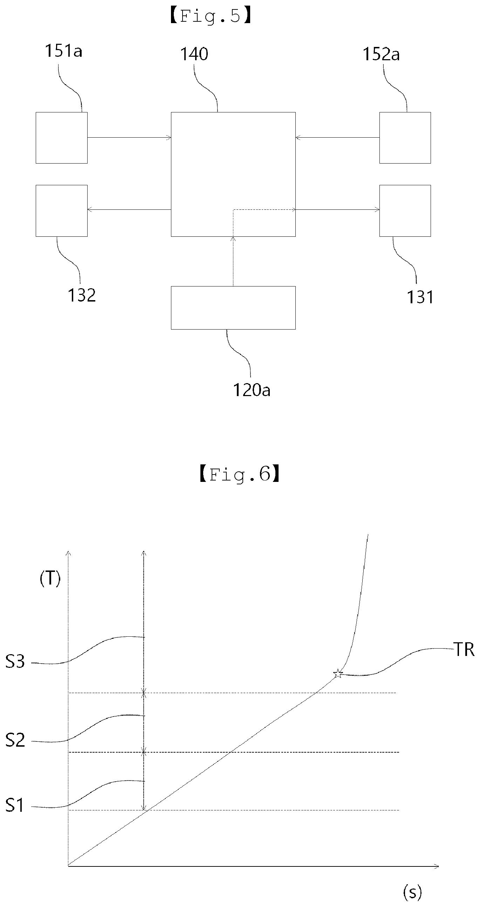

Referring to FIG. 2, the system 100 according to an embodiment of the present invention may include: a housing 110 configured to provide an accommodation space 110a in which the battery module BM is accommodated; a chamber 120 configured to store a fire extinguishing gas to be sprayed into the housing 110 in the form of fire extinguishing liquid; the fire extinguishing tube 130 connected to the chamber 120, and extended into the housing 110 along a predetermined path; and a control unit 140 configured to control the spraying of the fire extinguishing gas through the fire extinguishing tube 130. In this case, there is provided the vehicle battery fire prevention system 100 using liquefied carbon dioxide CO₂ in which the control unit 140 performs control so that spraying corresponding to a plurality of predetermined conditions for spraying into the accommodation space 110a can be performed. Furthermore, the control unit 140 is a type of electronic device and there are no limitations in shape or arrangement as long as it is electrically connected, so that it is shown in FIG. 5 via a schematic diagram and illustrations for separately elucidating the structure thereof are omitted.

The housing 110 has the battery module BM provided in the accommodation space 110a provided inside, and may maintain airtightness from the outside. The housing 110 has one end of the fire extinguishing tube 130, passing through the housing 110, connected to the chamber 120 that is provided outside the housing 110. A sealing part 111 is provided at a point penetrating the housing 110 so that the inside and outside of the housing 110 can be separated from each other. The chamber 120 contains carbon dioxide CO₂ in a liquefied state, and the contained carbon dioxide CO₂ may be phase-changed into a gaseous state and then be sprayed when it is sprayed into the housing 110 through the fire extinguishing tube 130. Accordingly, it may contain cooled carbon dioxide CO₂ having higher capacity compared to volume. The fire extinguishing tube 130 connected to the chamber 120 may be extended along a predetermined extension section inside the housing 110 to spray carbon dioxide CO₂ transferred from the chamber 120. This may be extended near the point where fire is likely to occur.

For example, in the case of the battery module BM that is stacked vertically based on FIG. 2, when electrode portions are located on the sides, the electrode portions are placed on the sides and the fire extinguishing tube 130 is extended along the edges to be adjacent to the electrode portions. It is obvious that the extended form of the fire extinguishing tube 130 is not limited to that of FIG. 2, which may be equally applied to various types of batteries such as prismatic, cylindrical, and pouch types in connection with the shape of batteries constituting the battery module BM.

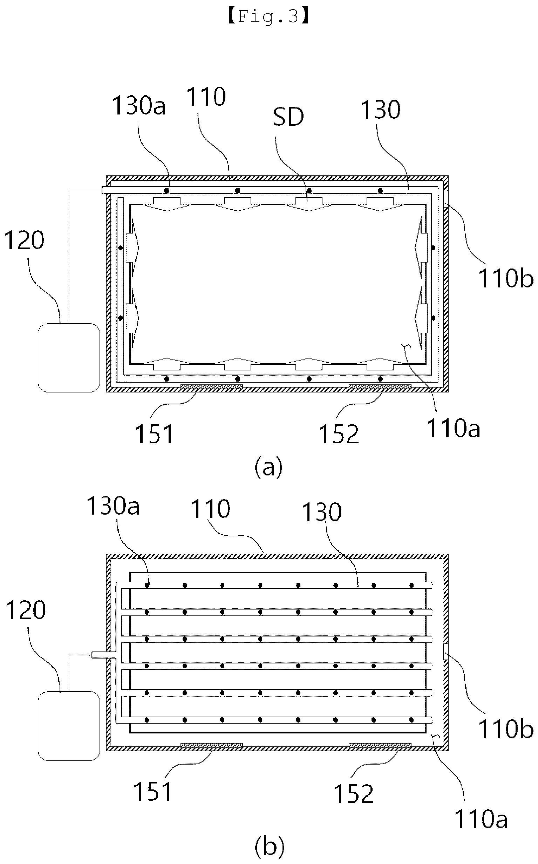

FIG. 3 shows an example of the extension of the fire extinguishing tube 130 according to an embodiment of the present invention. FIG. 3(a) is a view showing an embodiment in which the fire extinguishing tube 130 is extended along the edge of the battery module BM, and FIG. 3(b) is a view showing an embodiment in which the fire extinguishing tube 130 is extended to correspond to the top surface of the battery module BM.

Referring to FIG. 3, the fire extinguishing tube 130 may include nozzles 130a (the nozzles 130a shown in FIG. 3 indicate arbitrary locations and do not specify the shapes or locations thereof). The nozzles 130a allow carbon dioxide CO₂, provided from the chamber 120, to be sprayed into the housing 110, and the area affected by the spraying may change depending on where they are formed. Preferably, the locations where the nozzles 130a are formed may include at least the locations where the electrode portions are provided, and may be formed to include more locations. In the case of FIG. 3 shown, the fire extinguishing tube 130 may be extended along the inner peripheral surface of the housing 110, and may spray carbon dioxide CO₂ from the edges of the battery module BM toward the battery module BM. As described above, the spraying directions SD may include at least the directions of the electrode portions. This means that carbon dioxide CO₂, which is a fire extinguishing gas, is sprayed directly at the points where fire is likely to occur.

In the case of FIG. 3(b), the fire extinguishing tube 130 is provided on the top surface of the battery module BM. For example, the electrode portions may be directed upward, as in cylindrical batteries. To correspond to this, the fire extinguishing pipe 130 is provided in contact with the bottom of the inner side of the upper part of the housing 110, so that the fire extinguishing gas can be sprayed toward the electrode portions. Although the fire extinguishing pipe 130 may be provided as a separate member, a flow path may be formed in one or more walls of the housing 110 and the fire extinguishing gas may be sprayed along the flow path.

Meanwhile, the battery module BM and the fire extinguishing tube 130 may be located in the accommodation space 110a formed inside the housing 110, and the remaining space may be filled with air. In this case, the air may be composed of atmospheric components such as oxygen. The air inside the housing 110 is discharged to the outside by spraying carbon dioxide CO₂ at least once, so that the gas filling the accommodation space 110a can become carbon dioxide CO₂. It is obvious that this is a preferred example, and initial settings may be made such that at least 90% or more is composed of carbon dioxide CO₂.

In this case, an exhaust portion 110b may be provided in the housing 110 so that the air previously located in the accommodation space 110a can be exhausted out of the housing 110 through the spraying of carbon dioxide CO₂. More specifically, the housing 110 may be provided, on one side thereof, with the exhaust portion 110b that maintains airtightness between the accommodation space 110a and the outside, exhausts air to the outside when the pressure of the accommodation space 110a exceeds a predetermined value, and is opened to exhaust air only in one direction formed from the accommodation space 110a to the outside. That is, when the internal pressure of the housing 110 exceeds a predetermined pressure, one-way flow may be allowed such that air can be exhausted to the outside.

Meanwhile, one or more sensors configured to detect one or more of the pressure and temperature of the accommodation space 110a may be provided inside the housing 110. For example, a temperature sensor 151 is connected to the control unit 140, and thus the control unit 140, which receives internal temperature, can determine whether to spray carbon dioxide CO₂. Furthermore, a pressure sensor 152 may allow the control unit 140, which receives increased pressure information, to open the exhaust portion 110b when the pressure inside the housing 110 increases. It is obvious that the exhaust portion 110b may be configured to be electronically controlled by sensed pressure or may be configured to be mechanically operated to be open when a predetermined pressure is exceeded.

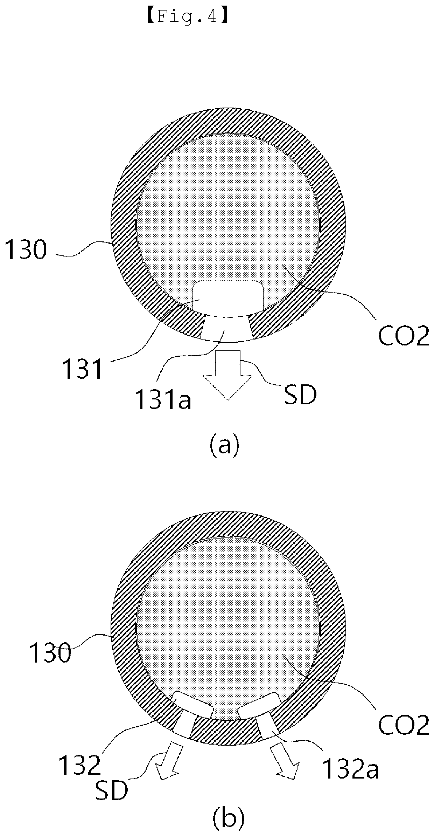

FIG. 4 is a cross-sectional view of the fire extinguishing tube 130 according to an embodiment of the present invention. FIG. 4(a) is a cross-sectional view of the point where the first nozzle 131a is formed, and FIG. 4(b) is a cross-sectional view of the points where the second nozzles 132a are formed.

Referring to FIG. 4, the nozzles 130a described above may be divided into the first nozzles 131a and the second nozzles 132a. More specifically, the fire extinguishing tube 130 has the first nozzles 131a configured to open inside the housing 110 toward the electrode portions of the battery module BM and the second nozzles 132a configured to have a narrower opening area and be formed to be more than the first nozzles 131a. The first nozzles 131a and the second nozzles 132a may be opened at different times by the control unit 140. The opening condition may be determined by the control unit 140 based on the sensed information transmitted from one or more of the temperature sensor 151 and the pressure sensor 152. This will be described in detail with reference to FIGS. 5 and 6 below.

A point where the possibility of fire is determined to be high, for example, the first nozzle 131a that is opened toward the electrode portion, may be determined to be opened according to the control of a first valve 131. When the first nozzle 131a is opened, carbon dioxide CO₂ inside the high-pressure fire extinguishing tube 130 may be sprayed into the relatively low-pressure accommodation space 110a. The amount of gaseous carbon dioxide CO₂ sprayed through the first nozzles 131a due to the opening of first valves 131 may be at least the amount of gaseous carbon dioxide CO₂ that can fill the accommodation space 110a.

Furthermore, the amount of carbon dioxide CO₂ sprayed through the second nozzles 132a when second valves are opened may be equal to or larger than the amount of gaseous carbon dioxide CO₂ that can fill the accommodation space 110a. As an example, opening may be performed such that the spraying of an amount of gaseous carbon dioxide CO₂ sufficient to fill the accommodation space 110a once is repeatedly performed. This may be performed repeatedly to reach the target temperature.

In this case, the target temperature may vary between the case of being sprayed through the first nozzle 131a and the case of being sprayed through the second nozzle 132a. For example, the spraying of carbon dioxide CO₂ through the first nozzle 131a may be intended to extinguish a fire at the point of fire. The spraying of carbon dioxide CO₂ through the second nozzle 132a may be used to suppress a rise in the temperature of the batteries and maintain the temperature of the battery module BM below a predetermined temperature.

Therefore, in order to form a larger spray area than the amount of gas to be sprayed, the second nozzles 132a may be formed in a plurality of directions to spray carbon dioxide CO₂. Through this, the accommodation space 110a may be filled with carbon dioxide CO₂ and cooling may be performed at the same time. The temperature at which liquefied carbon dioxide CO₂ is phase-changed into a gas and is then sprayed is at least a sub-zero temperature, and the accommodation space 110a is at a temperature of 0 degrees or more. Accordingly, heat exchange may occur through spraying, and thus the temperature inside the housing 110 can decrease.

Furthermore, it may be possible to maintain the ideal temperature range for a long time in the normal operation of the battery module BM. When the battery module BM is cooled through the system 100, an energy consumption efficiency of electric vehicles(km/kWh: distance(km) to drive per 1 kWh) including it may be improved.

FIG. 5 is a schematic diagram showing how whether to open the valve is determined by the control unit 140 according to an embodiment of the present invention. FIG. 6 is a graph showing the continuously increasing temperature over time in the system 100 according to an embodiment of the present invention.

Referring to FIGS. 5 and 6, the control unit 140 may allow the first valve 131 and the second valve 132 to be opened in different temperature ranges, respectively. More specifically, the plurality of predetermined conditions may be different temperature ranges, and for example, the different temperature ranges may include a first temperature range S1 including room temperature at which the battery module is operated, a second temperature range S2 including a temperature range higher than the first temperature range, and a third temperature range S3 including at least a temperature at which thermal runaway starts while being higher than the second temperature range. The temperature ranges in which the control unit 140 allows the fire extinguishing gas to be sprayed may be the second temperature range S2 and the third temperature range S3.

In this case, in the case where the first temperature range S1 is the ideal operating temperature range of the battery module BM, when the temperature sensor 151 detects the fact that the temperature of the accommodation space 110a increases to the second temperature range S2, which is a higher temperature, and transfers the information to the control unit 140, the control unit 140 may allow carbon dioxide CO₂ to be sprayed through the second nozzles 132a by opening the second valves 132. The sprayed sub-zero temperature carbon dioxide CO₂ exchanges heat with the temperature above 0 degree or more of the accommodation space 110a, thereby lowering the temperature of the accommodation space 110a. In this case, the pressure of the accommodation space 110a inside the housing 110 exceeds atmospheric pressure due to the sprayed carbon dioxide CO₂, and thus air may be partially exhausted through the exhaust portion 110b.

Meanwhile, when the temperature of the accommodation space 110a passes the second temperature range S2 and enters the third temperature range S3, the temperature may increase rapidly past the thermal runaway point and may result in combustion. In the case where the temperature of the accommodation space 110a corresponds to the third temperature range S3 and is detected by the temperature sensor 151, when the detection information is transferred to the control unit 140, the control unit 140 allows carbon dioxide CO₂ to be sprayed through the first nozzles 131a by opening the first valves 131. The third temperature range S3 includes the thermal runaway point, but starts from a temperature lower than the thermal runaway point. Accordingly, when the temperature enters the third temperature range S3, the temperature is prevented from reaching the thermal runaway point by immediately spraying carbon dioxide CO₂.

This mechanism has a strong cooling purpose (via spraying through the second nozzles 132a) so that the control unit 140 manages the temperature of the batteries through the detection information detected by the temperature sensor 151, and is intended to perform cooling and oxygen removal (via spraying through the first nozzles 131a) inside the accommodation space 110a to prevent thermal runaway in the event of a fire.

Meanwhile, the control unit 140 may be connected to the first valves 131 configured to determine the opening and closing of the first nozzles 131a, the second valves 132 configured to determine the opening and closing of the second nozzles 132a, and one or more of the temperature and pressure sensors 151 and 152 exposed to the accommodation space 110a, and may control the opening and closing of the first or second valves 131 or 132 based on the sensed information detected by one or more of the temperature and pressure sensors 151 and 152 from the accommodation space 110a. That is, the control unit 140 may be electrically connected to the first valves 131, the second valves 132, the pressure sensor 152, and the temperature sensor 151, and may perform control based on transferred sensed information.

Furthermore, the control unit 140 limits the spraying of the fire extinguishing gas through the second nozzles 132a when only the pressure and fire extinguishing liquid remaining within the chamber 120 can fill the accommodation space 110a with the fire extinguishing gas less than twice. In this case, the control unit 140 may maintain the control of the second valves 132 in a closed state, and may detect whether the first valve 131 is open based on sensed information transferred from the temperature sensor 151. In order to perform this operation, the control unit 140 may receive detection information from the sensor unit 120a connected to the chamber 120. The sensor unit 120a may transmit information about the pressure inside the chamber 120 and the remaining amount of liquefied carbon dioxide CO₂.

Although the representative embodiments of the present invention have been described in detail above, those having ordinary skill in the art to which the present invention pertains will appreciate that various modifications may be made to the above-described embodiments without departing from the scope of the present invention. Therefore, the scope of the present invention should not be limited to the described embodiments, but should be defined not only by the claims to be described later but also by equivalents to the claims.

## Claims

1. A vehicle battery fire prevention system using liquefied carbon dioxide, the vehicle battery fire prevention system including:
a housing configured to provide an accommodation space in which a battery module is accommodated;
a chamber configured to store a fire extinguishing gas to be sprayed into the housing in a fire extinguishing liquid form;
a fire extinguishing tube connected to the chamber, and extended into the housing along a predetermined path; and
a control unit configured to control spraying of the fire extinguishing gas through the fire extinguishing tube,
wherein the control unit performs control so that spraying corresponding to a plurality of predetermined conditions for spraying into the accommodation space can be performed.

2. The vehicle battery fire prevention system of claim 1, wherein, in the housing, the fire extinguishing tube includes one or more first nozzles configured to open toward electrode portions of the battery module, and second nozzles configured to have a smaller open area and be formed more than the first nozzles.

3. The vehicle battery fire prevention system of claim 2, wherein,
the plurality of predetermined conditions are different temperature ranges,
the different temperature ranges include a first temperature range including room temperature at which the battery module is operated, a second temperature range including a temperature range higher than the first temperature range and a third temperature range including at least a temperature at which thermal runaway starts while being higher than the second temperature range, and
temperature ranges in which the control unit allows the fire extinguishing gas to be sprayed are the second temperature range and the third temperature range.

4. The vehicle battery fire prevention system of claim 3, wherein the control unit allows the fire extinguishing gas to be sprayed through the first nozzles in the third temperature range, and allows the fire extinguishing gas to be sprayed through the second nozzles in the second temperature range.

5. The vehicle battery fire prevention system of claim 4, wherein the control unit limits the spraying of the fire extinguishing gas through the second nozzles when only a pressure and fire extinguishing liquid that can fill the accommodation space with the fire extinguishing gas less than twice remain inside the chamber.

6. The vehicle battery fire prevention system of claim 5, wherein the housing is provided, on one side thereof, with an exhaust portion configured to maintain airtightness between the accommodation space and an outside, to exhaust air to the outside when a pressure of the accommodation space exceeds a predetermined value, and to be opened to exhaust air only in one direction formed from the accommodation space to the outside.

7. The vehicle battery fire prevention system of claim 4, wherein the control unit:
is connected to the first valves configured to determine opening and closing of the first nozzles, the second valves configured to determine opening and closing of the second nozzles, and one or more of temperature and pressure sensors exposed to the accommodation space; and
control the opening and closing of the first or second valves based on sensed information detected by one or more of the temperature and pressure sensors from the accommodation space.

8. A vehicle battery module including the vehicle battery fire prevention system using liquefied carbon dioxide set forth in claim 1 and a battery module.

9. An electric vehicle including the vehicle battery module set forth in claim 8.
